# EUROPÄISCHE PATENTSCHRIFT

(11) **EP 0 499 773 B1**
(45) Veröffentlichungstag und Bekanntmachung des Hinweises auf die Patenterteilung: **12.04.1995**
(21) Anmeldenummer: 92100181.4
(22) Anmeldetag: 08.01.1992
(51) Int. Cl.: B61D 17/22, B62D 47/02, B60D 5/00

(54) **Faltenbalg für Übergänge von Gelenkfahrzeugen; Profil, Bausatz und Verfahren für die Befestigung des Faltenbalgs**
Bellows for communication passages of articulated vehicles; profile, kit and method for fixing the bellows
Soufflet pour passages d'intercommunication de véhicules articulés; profile, système modulaire et méthode pour la fixation du soufflet

(30) Priorität: 21.02.1991 DE 4105449
(43) Veröffentlichungstag der Anmeldung: 26.08.1992
(73) Patentinhaber: HÜBNER Gummi- und Kunststoff GmbH, D-34123 Kassel (DE)
(72) Erfinder: Koch, Robert, W-3437 Bad Sooden-Allendorf (DE); Mosander, Knud, W-3500 Kassel (DE)
(74) Vertreter: Walter, Helmut, Dipl.-Ing.

(56) Entgegenhaltungen:
- EP-A- 0 114 913
- DE-A- 1 400 854
- DE-B- 1 128 454
- GB-A- 480 497
- GB-A- 771 511
- GB-A- 1 228 200

## Beschreibung

Die Erfindung betrifft ein Faltenbalg für Übergänge von Gelenkfahrzeugen, gemäß dem Oberbegriff des Anspruchs 1.

Es ist allgemein übliche Praxis bei Gelenkfahrzeugen, insbesondere wenn sie der Personenbeförderung dienen, den Übergang zwischen den beiden gelenkig miteinander verbundenen Fahrzeugen mit einem Faltenbalg zu umgeben, damit Personen, vor Umgebungseinflüssen geschützt, von einem zum anderen Fahrzeug überwechseln können. Der Faltenbalg ist im wesentlichen ein beidseitig beschichtetes Gewebe, das in Falten gelegt wird, damit der Faltenbalg in sich die Relativbewegungen zwischen den beiden Fahrzeugen aufnehmen kann, ohne diese Relativbewegungen wesentlich zu behindern. An jedem Ende ist die Balgwand um ein ringsumlaufendes Kabel gelegt, dessen Enden in einem Schloß liegen. In der Öffnungsstellung des Schlosses kann das Balgende in ein rinnenförmiges Anschluß- oder Halteprofil eingelegt werden, das um eine Durchgangsöffnung in der Stirnseite des jeweiligen Fahrzeugs herumgeführt ist. In der Schließstellung des Schlosses sind die Kabelenden so weit einander genähert, daß Kabel und Balgende nicht mehr aus der vom Anschluß- bzw. Halteprofil gebildeten Rinne herausgehoben werden können.

Gegebenenfalls stützt sich das das Kabel umschließende Balgende über einen Dichtungsstreifen in der Rinne ab, um im Bereich des Balganschlusses das Eindringen von Umgebungseinflüssen in den vom Balg umschlossenen Übergangsbereich zu verhindern. (EP-A-0 114 913)

Diese Lösung bereitet nun zunehmend Schwierigkeiten bei modernen Fahrzeugen, deren Querschnitt sich zunehmend von der im Querschnitt eher ovalen Tonnenform entfernt und sich der Rechteckform annähert, wenn der Balg auch bei solchen eher kantigen Fahrzeugprofilen möglichst exakt dem Fahrzeugprofil folgen soll, was aus vielerlei Gründen wünschenswert sein kann. In den vier Kantenbereichen wird das jeweilige Spannkabel mit einem extrem kleinen Radius umgelenkt, so daß bei geschlossenem Spannschloß der Druck des Spannkabels auf das Anschlußprofil sich in einer extrem kleinen Fläche konzentriert, was zur Zerstörung der eingelegten DIchtung und der um das Kabel geführten Balgwand und schließlich zum Reißen des Spannkabels führen kann. Es ist bekanntgeworden, daß bei Auftreten solcher Schäden in der Praxis man sich damit beholfen hat, daß in den Kantenbereichen die Spannkabel mit kissenförmigen Polstern unterlegt wurden. Nachdem sich Gelenkfahrzeuge mit kantigem Profil zunehmend einführen bzw. schon eingeführt haben, stellen solche Notmaßnahmen auf die Dauer keine hinnehmbare Lösung dar.

Bekannt sind auch zum Einbau zwischen zwei gelenkig miteinander verbundenen Fahrzeugen bestimmte Bälge, die aus gummiartigen, d.h. in sich elastisch dehnfähigem Material bestehen, das wellenförmig ist, an dem dem einen der beiden Fahrzeuge zuzuordnenden Ende in einem glatten Endstreifen endet, der seinerseits an dem freien Ende eine leistenförmige Verdickung aufweist, die in eine Rinne eingedrückt werden kann, die von einer Leiste aus ebenfalls gummiartigem Material umschlossen ist, die einen starren rinnenförmigen Endrahmen des Fahrzeugs ausfüllt, wobei die Ausfütterung des Endrahmens die leistenförmige Verdickung und teilweise den glatten Endstreifen umgreift (GB-A-771,511/.

Aufgabe der vorliegenden Erfindung ist es, die im Zusammenhang mit der erstgenannten Lösung erörterten Nachteile in einer Weise abzustellen, daß nicht im Schadensfall mit Behelfsmaßnahmen gearbeitet werden muß und eine einwandfreie, betriebssichere Zuordnung des Faltenbalgs zum Fahrzeug auch bei eher kantigen Fahrzeugen gewährleistet ist. Unter "kantigen" Fahrzeugen werden Fahrzeuge verstanden, deren Querschnitt im Übergangsbereich zwischen zwei gelenkig miteinander gekuppelten Fahrzeugen weitgehend eine Rechteckform hat, bei denen also die Übergangsbereiche zwischen Dach und Boden einerseits und Seitenwänden andererseits Übergangsbögen mit nur sehr kleinen Krümmungsradien bilden, wobei die Faltenbälge in ihren Anschlußbereichen dieser Kontur weitestgehend folgen, sei es daß sich die Querschnittskontur von Balg und Fahrzeug im Bereich des Balganschlusses decken, sei es daß die Querschnittskonturen einander entsprechen, aber konzentrisch ineinanderliegen, im Anschlußbereich der Balgquerschnitt kleiner als der Fahrzeugquerschnitt ist. Bei der zuletzt geschilderten Situation kommt es verständlicherweise auf die Kontur des Fahrzeugquerschnitts gar nicht so sehr an und die Konturenentsprechung von Balg und Fahrzeug ist nicht zwingende Voraussetzung für die Erfindung, weil es bei ihr an sich nur darauf ankommt, daß das Spannkabel in der Form eines Rechtecks mit allenfalls wenig abgerundeten Ecken geführt ist. Wenn der Fall von derart voneinander abweichenden Formen von Fahrzeugquerschnitt und Form der Spannkabelführung, d.h. der Fall, bei dem die Querschnittsform des Fahrzeuges eher oval und die Form der Spannkabelführung dagegen eher ein exaktes Rechteck mit nur wenig abgerundeten Ecken ist, weniger Beachtung findet, so einfach aus der Überlegung heraus, daß eine solche Situation in der Praxis allenfalls ausnahmsweise auftreten sollte und das Problem als solches seine Ursache in der derzeit modernen Fahrzeugkontur, die eben kantig ist, hat.

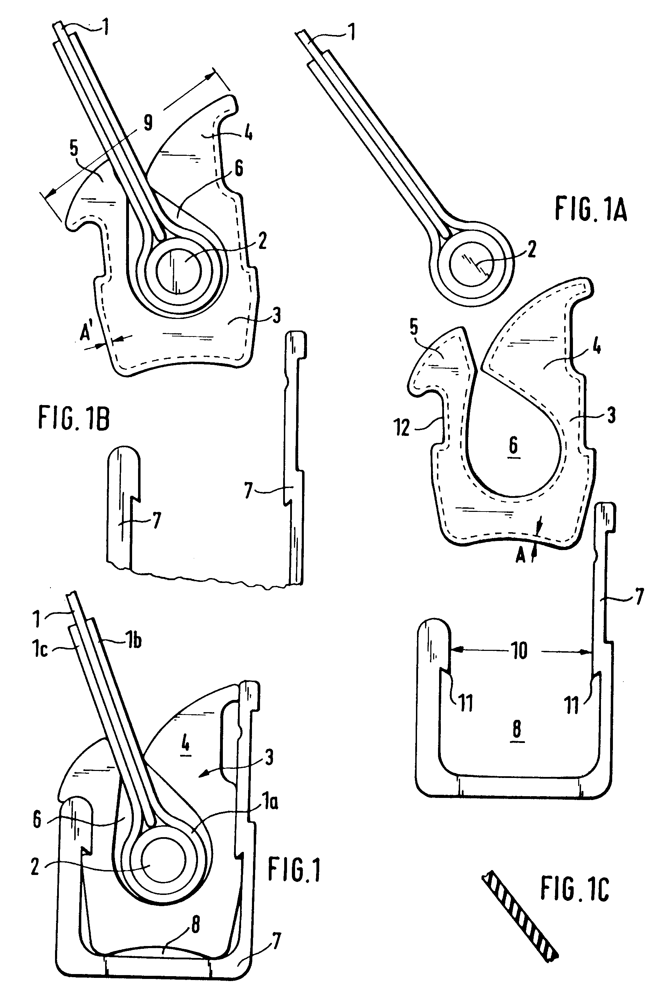

Die Erfindung, die zur Lösung der gestellten Aufgabe vorgeschlagen wird, ist durch die Merkmale der Patentansprüche gekennzeichnet. Sie ist nachfolgend anhand der Zeichnung erläutert, in der jede der Figuren 1 bis 4 einen erfindungsgemäßen Balganschluß im Querschnitt und in schematischer Darstellung zeigt.

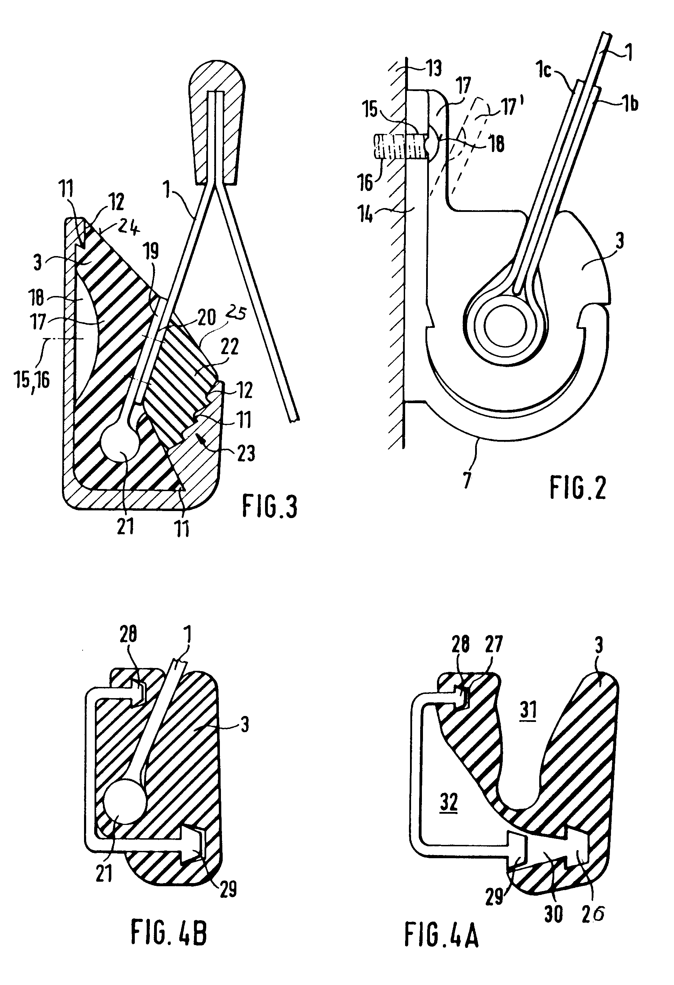

Die Lösungen gemäß Fig. 1,2 sind primär für den Fall gedacht, daß das eingangs ausführlich geschilderte Problem bei konventional ausgebildeten, gegebenenfalls sogar schon im Einsatz befindlichen Bälgen nachträglich behoben werden soll, ein konventioneller Balg also nachgerüstet werden soll. Die Balgwand endet in einem Streifen 1, der in einfachster Weise um das Spannkabel 2 herumgeführt ist, wobei der um das Spannkabel herumgeführte Streifenabschnitt mit dem eigentlichen Streifen durch Nähen, Kleben o.dgl. dauerhaft verbunden ist. Das Spannkabel 2 befindet sich also in einer von der Balgwand unmittelbar gebildeten Schlaufe. In der dargestellten Ausführungsform ist diese Lösung lediglich insoweit abgewandelt, als eine separate Schlaufe 1a vorgesehen ist, die das Spannkabel 2 umschließt und die mit Endlaschen 1b,1c auf beiden Seiten des Balgstreifens 1 aufliegt, wobei die beiden Laschen 1b,1c mit dem zwischen ihnen liegenden Streifen 1 fest und dauerhaft verbunden sind. Diesem Balgende, das im Querschnitt, d.h. beim Blick senkrecht auf eine Fahrzeugstirnseite ein Rechteck mit allenfalls wenig abgerundeten Ecken beschreibt, ist nun ringsumlaufend eine Leiste aus in sich erheblich elastischem Material in der Art von Gummi als Endprofil 3 des Balges zugeordnet. Während der Balg selbst aus einem beiderseits beschichteten Gewebe besteht, wie es in Fig. 1 der Zeichnung seitlich versetzt in der Teilfigur 1C (Fig. 1c) angedeutet ist, besteht das leistenförmige Endprofil 3 durchweg aus Gummi oder einem Material mit den Eigenschaften von Gummi. Das Endprofil 3 begrenzt mit zwei Lippen 4,5 eine Rinne 6. Im nicht eingebauten Zustand, wenn die Leiste entspannt ist, sind die einander gegenüberliegenden Bereiche der Lippen 4,5 weitgehend einander angenähert. Zum Aufstecken des Endprofils 3 auf den durch das Spannkabel 2 und die Schlaufe 1a gekennzeichneten Endbereich des Balges mit seinem Endstreifen 1 werden die Lippen unter Ausbildung einer federnden Spannung aufgespreizt, das Balgende wird in die Rinne 6 eingeführt und beim Nachlassen der Spreizkraft nähern sich die Lippen 4,5 soweit einander, daß sie mit einer gewollten Restspannung an dem Balgende anliegen.

In der Teilfigur 1A ist das Endprofil 3 des Balges zunächst noch vom Balg 1 getrennt, noch nicht in das Halteprofil eingesetzt und im entspannten Zustand dargestellt (Fig. 1A). In der Teilfigur 1B ist dasselbe Endprofil nach der Zuordnung zu dem Faltenbalg aber noch außerhalb des Halteprofils mit einer Restspannung in den Lippen 4,5 dargestellt (Fig. 1B) und in Fig. 1 selbst schließlich ist die Situation des Endprofils nach der Zuordnung zum Balg und dem Einsetzen in das Halteprofil 7 dargestellt, das an einer Wagenstirnwand befestigt ist.

Im Zustand der Zuordnung zum Balg vor der Zuordnung zum Halteprofil (Fig. 1B) hat das Endprofil 3 noch ein gegenüber dem Übermaß A im Ausgangszustand verringertes gewisses Übermaß A' gegenüber der Abmessung der vom Halteprofil 7 umschlossenen Rinne 8. Dieses Übermaß muß durch Druck auf das Endprofil 3 so weit unterschritten werden, daß der Balg mit dem Endprofil 3 in das Halteprofil 7 eingeführt werden kann, um sich danach unter Verbleib einer Restspannung so weit zu entspannen, daß es spiellos in dem Halteprofil 7 sitzt (Fig. 1). Zwischen Wänden des Halteprofils 7 ist das Endprofil 3 so gehalten, daß die in Fig. 1B in den Lippen 4,5 vorhandene Restspannung erhöht wird und die Lippen zusätzlich an den Faltenbalg angedrückt werden. Der Abstand 9 zwischen den Außenflächen der Lippen 4,5 nach dem Aufstecken des Randprofils auf den Faltenbalg, aber noch vor dem Einsetzen in das Halteprofil 7 (Fig. 1B) ist größer als der Abstand 10 zwischen den zugeordneten Flächenbereichen des Halteprofils.

Zur weiteren Sicherung des Randprofils 3 in dem Halteprofil 7 sind die einander zugekehrten Flächen beider Profile mit reibungserhöhenden Mitteln versehen, die einander zugeordnete und aufeinanderfolgende Leisten 11 und Nuten 12 beider Profile sind.

Die Anordnung nach Fig. 2 unterscheidet sich von der Anordnung nach Fig. 1 im Grunde genommen nur dadurch, daß die eher eckigen Konturen von Endprofil 3 und Halteprofil 7 gerundet sind. Insoweit sind gleiche Teile oder Teilabschnitte in beiden Fällen mit gleichen Bezugszeichen versehen. Besonderer Wert ist auf die Möglichkeit der Zuordnung des Halteprofils zum Fahrzeug 13 gelegt. Die dem Faltenbalg 1 ab- und dem Fahrzeug 13 zugekehrte Seite des Halteprofils 7 ist relativ großflächig und eben ausgebildet, um eine gute Auflage auf einer Fahrzeugwand zu haben. Dieser ausgeprägte Flansch 14 ist mit auf die Flanschlänge verteilten Löchern 15 versehen, durch die Schrauben 16 zum Halten des Halteprofils 7 am Fahrzeug 13 geführt sind. Das Endprofil 3 ist mit einer Fahne 17 versehen, die mit einer gewissen Vorspannung an dem Flansch 14 anliegt, um die Befestigungsmittel 15,16 zu verdecken. Um die Befestigungsmittel 15,16 zugänglich zu machen, ist es lediglich erforderlich, die Fahne 17 vom Flansch 14 abzuspreizen, wie es in Fig. 2 durch einen gestrichelten Linienzug 17' dargestellt ist. Im Bereich der Befestigungsmittel 15,16 kann die Fahne 17 mit Vertiefungen 18 versehen sein, um die Fahne auf möglichst großer Fläche satt auf dem Flansch aufliegen zu haben.

Eine Ausführungsform, wie sie insbesondere für den Neubau von Faltenbälgen geeignet ist, ergibt sich aus Fig. 3. Hier wird dem letzten Streifen 1 des eigentlichen Faltenbalgs eine Endleiste 19 fest zugeordnet, die aus dem eigentlichen, leistenförmigen Abschnitt 20 und einem an dessen freiem Ende angeformten Kabel 21 besteht. Während das Spannkabel 2 bei den Lösungen gemäß Fig. 1,2 bevorzugt aus Metall und nur ausnahmsweise aus einem anderen Material besteht, beispielsweise ein Gummikabel ist und dabei ein Spannschloß vorgesehen ist, so daß ein Gummikabel nur in Grenzen dehnbar ist oder sogar sein sollte, ist das Kabel 21 nur ausnahmsweise ein Metallkabel, im Regelfall dagegen ein Gummikabel, das endlos und in dem Maße dehnbar ist, daß es über die dem Fahrzeug abgekehrte Wange des Halteprofils 7 gehoben werden kann und dabei zusätzlich elastisch gedehnt wird, während es nach dem Einlegen in die Rinne des Halteprofils 7 noch eine solche Restspannung behält, daß es unter normalen Beanspruchungen den Faltenbalg in der Rinne des Halteprofils zu halten vermag. Vor dem Einsetzen in das Halteprofil wird wiederum der Faltenbalg durch ein Endprofil 3 ergänzt, das über das Spannkabel 21 gestülpt worden ist. Der auf diese Weise mit einem Endprofil versehene und vervollständigte Faltenbalg wird in das Halteprofil 7 eingehängt, wobei wieder reibungserhöhende Mittel in der Form von Leisten 11 und Nuten 12 zwischen der Außenfläche des Endprofils und der Innenfläche des Halteprofils zur Wirkung kommen. Ist der Faltenbalg mit seinem Endprofil 3 in die Rinne des Halteprofils 7 eingesetzt, so ist diese Rinne aber noch nicht ausgefüllt und es wird eine kederförmige Leiste 22 beigelegt. Diese liegt nach dem Einlegen unter Vorspannung zwischen dem Endstreifen 1 des Faltenbalgs und einem gegenüberliegenden, vorher noch freigebliebenen Wandabschnitt 23 des Halteprofils, das bei allen Ausführungsformen durchweg aus starrem Material, vorzugsweise Metall und insbesondere Aluminium besteht. Die kederförmige Leiste 22 drückt mit ihrer Vorspannung den Endabschnitt des Endstreifens 1 des Faltenbalgs unter Zwischenschaltung des eigentlich leistenförmigen Abschnitts 20 der Endleiste 19 gegen die am Fahrzeug festgelegte Wange des Halteprofils 7 und stützt sich ihrerseits an dem Wandabschnitt 23 ab, bei dem wie bei der zugehörigen Wand der kederförmigen Leiste Nuten 12 und Leisten 11 aufeinanderfolgen, hierbei jedoch so sägezahnförmig ausgebildet sind, daß die kederförmige Leiste 22 ohne größeren Kraftaufwand zwischen den Streifen 1 des Faltenbalgs und den Wandabschnitt 23 eingedrückt werden kann, jedoch nur mit erheblichem Kraftaufwand wieder ausgebaut werden kann. Auch bei dieser Lösung überwölbt ein fahnenartiger Abschnitt 17 die Befestigungsmittel 15,16 für das Halteprofil, dieser dient jedoch primär der Festlegung des Endprofils 3 in dem Halteprofil 7. Die dem Faltenbalg zugekehrte Außenfläche 24 des Endprofils 3 setzt sich auf der anderen Seite des Endstreifens 1 des Faltenbalgs im wesentlichen stufenlos in der Außenfläche 25 der kederförmigen Leiste 22 fort. Im Verhältnis zum Halteprofil 7 ist das Endprofil 3 in hohem Maße elastisch federnd, während die kederförmige Leiste 22 insoweit zwischen Halteprofil 7 und Endprofil 3 liegt, also in größerem Maße elastisch federnd nachgiebig als das Halteprofil 7 ist, aber in geringerem Maße als das Endprofil 3 elastisch federnd ist.

Eine Weiterentwicklung der Lösung gemäß Fig. 3 ist in Fig. 4 mit den Teilfiguren 4a,4b dargestellt, die sich allerdings von dieser vorausgegangenen Lösung in Richtung auf den Stand der Technik bewegt. Zwischen der vorausgegangenen Lösung und bekannten Lösungen liegt die Lösung gemäß Fig. 4 deswegen, weil das einteilige Endprofil 3 während dem Zuordnen des Faltenbalgs 1 zum Halteprofil 7 dem Faltenbalg zugeordnet wird.

Das Endprofil 3 aus elastisch nachgiebigem, gummiartigem Material gemäß Fig. 4 ist mit zwei Längsnuten 26,27 versehen, mit denen das Endprofil 3 im wesentlichen noch außerhalb des Befestigungsprofils 7 liegend auf kopfartig erweiterte Endleisten 28,29 aufzustecken ist (Fig. 4a). Dabei wird zunächst die Endleiste 28 zum Eindringen in die Längsnut 27 gebracht, während die Endleiste 29 nur knapp zum Eindringen in einen im Querschnitt hals- oder trichterförmigen Abschnitt 30 der Längsnut 26 gebracht wird und sich also die Längsnut 26 noch außerhalb des Bereiches der Endleiste 29 des Endprofils 3 befindet. In dieser in Fig. 4a dargestellten Situation wird das gemäß Fig. 3 ausgebildete Ende des Faltenbalgs mit dem Spannkabel 2 in eine Nut 31 des noch weitgehend entspannten Endprofils 3 gebracht. Ist das Faltenbalgende mit dem Spannkabel 2 in Anlage am entsprechend ausgerundeten Grund der Nut 31 zur Anlage gekommen und wirkt der Druck, der dies bewirkt hat, unter angemessener Erhöhung weiter, so wird die Endleiste 3 in die Rinne 32 des Halteprofils eingedrückt und insbesondere gelangt die Endleiste 29 in die Längsnut 26, so daß das Endprofil 3 unter Vorspannung in und auf dem Halteprofil 7 gehalten ist und der Faltenbalg an der Fahrzeugstirnseite gehalten ist (Fig. 4b). Der Endstreifen 1 des Faltenbalgs, dem das Spannkabel 2 direkt oder in einer Fig. 3 entsprechenden Weise zugeordnet ist, ist auf einem erheblichen Teil seiner Breite im Endprofil 3 gehalten, so daß eine zuverlässige Festlegung gegeben ist. Das Übermaß des Endprofils im entspannten Zustand und relativ zur Innenkontur des Halteprofils gewährleistet eine Vorspannung in dem in seiner Endposition befindlichen Endprofil 3, daß dies bei normaler Betriebsbeanspruchung nicht vom Halteprofil 7 getrennt werden kann und zum Ausbau entsprechend höhere Kräfte aufgewendet werden müssen. Demzufolge hat bei der Lösung nach Fig. 4 und in abgemildeter Weise auch bei der Lösung nach Fig. 3 das Spannkabel 2 nicht mehr so sehr die Funktion des Spannens des Balges gegenüber dem Halteprofil. Das "Spannkabel" ist eher ein verdicktes Ende des Endstreifens 1, um diesen nicht allein durch die Reibung zwischen seinen Seitenflächen und den entsprechenden Flächen des Endprofils 3 zu halten und außerdem ein ungewolltes Eingreifen zu verhindern.

In Fig. 4a ist die zuletzt beschriebene Lösung in einer Zwischenposition während des Einbaues gezeigt, während in Fig. 4b der endgültige Endzustand dargestellt ist.

## Patentansprüche

1. Faltenbalg aus einem beschichteten Gewebe, d.h. in sich unelastischem Material und zur Befestigung an der Stirnseite eines Fahrzeuges, wobei die Faltenbahnkontur zumindest im Bereich der Befestigung weitgehend der Kontur des Fahrzeugs folgt, so daß dort Außenkontur des Fahrzeugs und Balgquerschnitt zuzmindest im wesentlichen einander gleichen bzw. konzentrisch zueinander verlaufen, wobei weiter der Balg (1) mit seinem dem Fahrzeug zuzuordnenden umlaufenden Rand mittels eines umlaufenden Spannkabels (2) in einem eine Rinne bildenden umlaufenden Befestigungsprofil (7) der Fahrzeugstirnseite zu halten ist und wobei sich zwischen dem Spannkabel (2) und der Rinne eine elastisch verformbare Leiste (3) befindet, **dadurch gekennzeichnet,** daß der Faltenbalg (1) in der Leiste (3) als seinem umlaufenden Endprofil (3) endet, das eine großvolumige Verdickung (1a, b, c) aus einem in sich elastisch verformbaren, gummiartigen, damit vom Material des Faltenbalges deutlich verschiedenen Material ist und das in den Balg integrierte Spannkabel (2) umgreift.

2. Faltenbalg nach Anspruch 1, **dadurch gekennzeichnet,** daß das Endprofil (3) entlang dem Balgrand auf dem gesamten Balgumfang dem Faltenbalgs zugeordnet ist.

3. Faltenbalg nach Anspruch 1 oder 2, **dadurch gekennzeichnet,** daß das Endprofil (3) auf den Balgrand (1) aufgesteckt und durch die Klemmwirkung des elastischen Materials auf dem Balgrand gehalten ist.

4. Faltenbalg nach einem der Ansprüche 1 bis 3, **dadurch gekennzeichnet,** daß das Endprofil (3) auf der Außenseite mit reibungserhöhenden Mitteln (11,12) versehen ist.

5. Faltenbalg nach Anspruch 4, **dadurch gekennzeichnet,** daß die reibungserhöhenden Mittel in Umfangsrichtung der Leiste aufeinanderfolgende Leisten- und Nutenabschnitte (11,12) sind.

6. Aufnahmeprofil zur Befestigung an der Stirnseite eines Fahrzeugs und zur Aufnahme eines Faltenbalgs gemäß einem der Ansprüche 1 bis 5, das rinnenförmig ist und dessen Länge der Länge des Faltenbalgumfangs im Befestigungsbereich entspricht, **dadurch gekennzeichnet,** daß der Querschnitt der Rinne um so viel enger als die Weite der Leiste ist, daß die Leiste teilweise in die Rinne einführbar ist und dabei eine Vorspannung bzw. eine zusätzliche Vorspannung erhält.

7. Aufnahmeprofil nach Anspruch 6, **dadurch gekennzeichnet,** daß sein Querschnitt im wesentlichen eckig ist und daß die Profilwände eine im Querschnitt im wesentlichen eckige Rinne (8) zur Aufnahme eines im Querschnitt im wesentlichen eckigen Endprofiles eines Faltenbalgs umschließen.

8. Aufnahmeprofil nach Anspruch 6, **dadurch gekennzeichnet,** daß sein Querschnitt im wesentlichen rund ist und daß die Profilwand eine im Querschnitt im wesentlichen runde Rinne zur Aufnahme eines im Querschnitt im wesentlichen runden Endprofils eines Faltenbalgs umschließt.

9. Aufnahmeprofil nach Anspruch 8, **dadurch gekennzeichnet,** daß sich an einen runden Abschnitt (7) des Profils ein flanschartiger, ebener Abschnitt (14) mit Mitteln (15,16) zur Befestigung des Aufnahmeprofils am Fahrzeug anschließt.

10. Aufnahmeprofil nach Anspruch 6, **dadurch gekennzeichnet,** daß die Profilwände eine im wesentlichen rechteckige, offene Rinne (32) zur Aufnahme eines Endprofils (3) des Faltenbalgs umschließen und deren Enden als verdickte Köpfe (28,29) ausgebildet sind.

11. Bausatz aus einem Faltenbalg nach einem der Ansprüche 1 bis 5 und einem Aufnahmeprofil nach einem der Ansprüche 6 bis 10, **dadurch gekennzeichnet,** daß das Aufnahmeprofil (3) einen rinnenförmigen Aufnahmeraum (8,32) umschließt, der im Querschnitt gegenüber dem Außenumfang des Teiles des Endprofils (3), der zum Einbringen in das Aufnahmeprofil bestimmt ist, im entspannten Zustand des Endprofils unterdimensioniert ist.

12. Bausatz nach Anspruch 11 **dadurch gekennzeichnet,** daß das Endprofil (3) und Aufnahmeprofil (7) über reibungserhöhende Mittel (11,12) aneinanderliegen, die das Eindringen des Endprofils in das Aufnahmeprofil mit relativ geringem Kraftaufwand, das Heraustreten des Endprofils aus dem Randprofil nur bei relativ hohem Kraftaufwand zulassen.

13. Bausatz nach einem der Ansprüche 11 und 12, **dadurch gekennzeichnet,** daß das Endprofil (3) einen wesentlich kleineren Querschnitt als das Aufnahmeprofil (7) hat und der nicht vom Endprofil beanspruchte Querschnittsanteil des Aufnahmeprofils von einer kederförmigen Leiste (22) ausgefüllt wird, die unter Druckverformung des Endprofils in das Aufnahmeprofil einzubringen ist.

14. Bausatz nach einem der Ansprüche 11 und 12, **dadurch gekennzeichnet,** daß das Spannkabel ein Stahlseil ist, in das ein Spannschloß eingefügt ist.

15. Bausatz nach Anspruch 13, **dadurch gekennzeichnet,** daß das Spannkabel ein endloses Gummikabel ist.

16. Verfahren zum Herstellen eines Bausalzes nach einem oder Ansprüche 11 und 12 und Anspruch 14, **dadurch gekennzeichnet,** daß in einem ersten Verfahrensschritt das Endprofil (3) auf die Endbahn (1) des Faltenbalgs aufgesteckt wird, um auf dieser durch Vorspannung bzw. Klemmwirkung gehalten zu werden, daß danach der Faltenbalg mit dem Endprofil in die vom Aufnahmeprofil (7) umschlossene Rinne (8) eingelegt wird, während das Spannkabel bei offenem Spannschloß seine Maximallänge hat und die Vorspannung im Endprofil erhöht wird und daß dann durch Schließen des Spannschlosses das Spannkabel verkürzt wird.

17. Verfahren zum Herstellen eines Bausatzes nach den Ansprüchen 13 und 15, **dadurch gekennzeichnet,** daß in einem ersten Verfahrensschritt das Endprofil (3) auf die Endbahn (1) des Faltenbalges aufgesteckt wird, um auf dieser durch Vorspannung bzw. Klemmwirkung gehalten zu werden, daß danach der Faltenbalg mit dem Endprofil in die vom Aufnahmeprofil (7) umschlossene Rinne (8) eingblegt wird, die vom Aufnahmeprofil umschlossene Rinne nur teilweise ausfüllt und daß abschließend eine kederförmige Leiste (22) eingelegt wird, um den Restquerschnittsbereich des Aufnahmeprofiles unter Erzeugung von Kompression des Endprofils auszufüllen.

## Claims

1. A bellows made of coated fabric, i.e. intrinsically non-elastic material, for fastening to the end face of a vehicle, the bellows contour, at least where it is fastened, substantially following the contour of the vehicle, where the outer contour of the vehicle and the bellows cross-section are at least substantially similar or concentric with one another, the peripheral edge of the bellows (1) associated with the vehicle being held by a peripheral bracing cable (2) in a channel-shaped peripheral securing profile (7) in the vehicle end face, and a resiliently deformable strip (3) being disposed between the bracing cable (2) and the channel, characterised in that the bellows (1) in the strip (3) ends in the form of a peripheral end profile (3) which is a large-volume thick portion (1a, 1b, 1c) of intrinsically elastically deformable elastomeric material, i.e. appreciably different from the bellows material, and surrounds the bracing cable (2) incorporated in the bellows.

2. A bellows according to claim 1, characterised in that the end profile (3) is associated with the bellows along the edge thereof and along the entire periphery thereof.

3. A bellows according to claim 1 or 2, characterised in that the end profile (3) is fitted on to the bellows edge (1) and held by the clamping effect of the resilient material on the bellows edge.

4. A bellows according to any of claims 1 to 3, characterised in that the end profile (3) on the outside is provided with friction-increasing means (11, 12).

5. A bellows according to claim 4, characterised in that the friction-increasing means are strip and groove portions (11, 12) which follow one another in the peripheral direction of the strip.

6. A receiving profile for securing to the end face of a vehicle and for receiving a bellows according to any of claims 1 to 5 and channel-shaped, its length corresponding to the length of the bellows periphery in the securing region, characterised in that the cross-section of the channel is narrower than the width of the strip to an extent such that the strip can be partly inserted into the channel and is prestressed or additionally prestressed in the process.

7. A receiving profile according to claim 6, characterised in that its cross-section is substantially angular and the profile walls surround a substantially angular cross-section channel (8) for receiving a substantially angular cross-section end profile of a bellows.

8. A receiving profile according to claim 6, characterised in that its cross-section is substantially round and the profile wall encloses a channel having a substantially round cross-section for receiving a bellows end profile which has a substantially round cross-section.

9. A receiving profile according to claim 8, characterised in that a round portion (7) of the profile is adjacent a flange-like flat portion (14) comprising means (15, 16) for securing the receiving profile to the vehicle.

10. A receiving profile according to claim 6, characterised in that the profile walls enclose a substantially rectangular open channel (32) for receiving an end profile (3) of the bellows, the ends of the walls being in the form of thickened heads (28, 29).

11. A kit comprising a bellows according to any of claims 1 to 5 and a receiving profile according to any of claims 6 to 10, characterised in that the receiving profile (3) surrounds a channel-like receiving chamber (8, 32) having a cross-section which is under-dimensioned compared with the outer periphery of that part of the end profile (3) which is intended for insertion into the receiving profile, when the end profile is in the tension-free state.

12. A kit according to claim 11, characterised in that the end profile (3) and the receiving profile (7) abut one another with interposition of friction-increasing means (11, 12) which enable the end profile to be inserted into the receiving profile with relatively little force, whereas relatively considerable force is required to pull the end profile out of the edge profile.

13. A kit according to claim 11 or 12, characterised in that the end profile (3) has a substantially smaller cross-section than the receiving profile (7), and the part of the cross-section of the receiving profile not occupied by the end profile is filled by a welt-like strip (22), inserted into the receiving profile by compressing and deforming the end profile.

14. A kit according to claim 11 or 12, characterised in that the bracing cable is a steel cable containing a tightener.

15. A kit according to claim 13, characterised in that the bracing cable is an endless rubber cable.

16. A method of manufacturing a kit according to one of the claims 11 and 12 and 14, characterised in that in a first step, the end profile (3) is placed on the end length (1) of the bellows so as to be held on it by prestress or clamping, after which the end profile of the bellows is inserted in the channel (8) surrounded by the receiving profile (7), when the tightener is open and the bracing cable has its maximum length and the prestress in the end profile is increased, and finally the bracing cable is shortened by closing the tightener.

17. A method of manufacturing a kit according to claim 13 or 15, characterised in that in a first step, the end profile (3) is fitted on to the end length (1) of the bellows, in order to be secured thereto by prestress or clamping, after which the end profile of the bellows is inserted into the channel (8) surrounded by the receiving profile (7) and only partly fills the channel surrounded by the receiving profile, and finally a welt-like strip (22) is inserted in order to fill up the remaining cross-sectional area of the receiving profile while compressing the end profile.

## Revendications

1. Soufflet en tissu enduit, c'est-à-dire en matériau non élastique en soi, destiné à être fixé à la face frontale d'un véhicule, le contour du lé plissé épousant en grande partie le contour du véhicule au moins dans la zone de fixation, de façon qu'à cet endroit le contour extérieur du véhicule et la section transversale du soufflet coïncident au moins en grande partie ou s'étendent concentriquement l'un par rapport à l'autre, le bord périphérique du soufflet (1) en contact avec le véhicule étant maintenu au moyen d'un câble de serrage périphérique (2) dans un profilé de fixation périphérique formant gouttière (7) de la face frontale du véhicule, et une languette déformable élastiquement (3) se trouvant entre le câble de serrage (2) et la gouttière, caractérisé en ce que le soufflet (1) aboutit dans la languette (3) qui constitue un profilé d'extrémité périphérique (3) qui entoure un renflement volumineux (1a, 1b, 1c), réalisé dans un matériau déformable élastiquement du type caoutchouc et en cela radicalement différent du matériau du soufflet, et le câble de serrage (2) intégré au soufflet.

2. Soufflet selon la revendication 1, caractérisé en ce que le profilé d'extrémité (3) est monté sur le soufflet le long du bord du soufflet sur toute la périphérie du soufflet.

3. Soufflet selon la revendication 1 ou 2, caractérisé en ce que le profilé d'extrémité (3) est emmanché sur le bord (1) du soufflet et y est maintenu par l'effet de blocage du matériau élastique sur le bord du soufflet.

4. Soufflet selon l'une des revendications 1 à 3, caractérisé en ce que, sur son côté extérieur, le profilé d'extrémité (3) est muni de moyens d'augmentation du frottement (11, 12).

5. Soufflet selon la revendication 4, caractérisé en ce que les moyens d'augmentation du frottement sont des portions de languettes et de rainures (11, 12) qui se succèdent dans le sens circonférentiel de la languette.

6. Profilé récepteur pour effectuer une fixation sur la face frontale d'un véhicule et pour recevoir un soufflet conforme aux revendications 1 à 5, ledit profilé récepteur ayant la forme d'une gouttière et sa longueur correspondant à celle du pourtour du soufflet dans la zone de fixation, caractérisé en ce que la section transversale de la gouttière est plus étroite que la largeur de la languette, de façon que la languette puisse être partiellement introduite dans la gouttière et y soit exposée à une précontrainte ou à une précontrainte supplémentaire.

7. Profilé récepteur selon la revendication 6, caractérisé en ce que sa section transversale est sensiblement anguleuse, et en ce que les parois du profilé entourent une gouttière (8) dont la section transversale est sensiblement angulaire et qui reçoit le profilé d'extrémité, à section sensiblement anguleuse, d'un soufflet.

8. Profilé récepteur selon la revendication 6, caractérisé en ce que sa section transversale est sensiblement ronde, et en ce que la paroi du profilé entoure une gouttière dont la section transversale est sensiblement ronde et qui reçoit le profilé d'extrémité, à section sensiblement ronde, d'un soufflet.

9. Profilé récepteur selon la revendication, caractérisé en ce qu'une portion ronde (7) du profilé se prolonge par une portion plane formant semelle (14) munie de moyens (15, 16) pour fixer le profilé récepteur au véhicule.

10. Profilé récepteur selon la revendication 6, caractérisé en ce que les parois du profilé entourent une gouttière ouverte sensiblement rectangulaire (32) destinée à recevoir un profilé d'extrémité (3) du soufflet, et en ce que les extrémités desdites parois se présentent sous la forme de têtes épaissies (28, 29).

11. Ensemble structurel composé d'un soufflet conforme à l'une des revendications 1 à 5 et d'un profilé récepteur conforme à l'une des revendications 6 à 10, caractérisé en ce que le profilé récepteur (3) entoure un espace de réception formant gouttière (8, 32) dont la section transversale, lorsque le profilé d'extrémité est à l'état relâché, est sous-dimensionnée par rapport à la périphérie extérieure de la partie du profilé d'extrémité (3) destinée à être introduite dans le profilé récepteur.

12. Ensemble structurel selon la revendication 11, caractérisé en ce que le profilé d'extrémité (3) et le profilé récepteur (7) sont appliqués l'un contre l'autre par l'intermédiaire de moyens d'augmentation du frottement (11, 12) qui permettent d'introduire le profilé d'extrémité dans le profilé récepteur avec un effort relativement réduit, mais qui n'autorisent la sortie du profilé d'extrémité hors du profilé formant bord qu'au prix d'un effort relativement élevé.

13. Ensemble structurel selon l'une des revendications 11 et 12, caractérisé en ce que le profilé d'extrémité (3) possède une section transversale nettement plus petite que celle du profilé récepteur (7), et en ce que la portion de section transversale du profilé récepteur qui n'est pas occupée par le profilé d'extrémité est comblée par une languette (22) en forme de bourrelet qui peut être introduite dans le profilé récepteur par déformation sous pression du profilé d'extrémité.

14. Ensemble structurel selon l'une des revendications 11 et 12, caractérisé en ce que le câble de serrage est un câble en acier auquel est ajouté un cadenas de serrage.

15. Ensemble structurel selon la revendication 13, caractérisé en ce que le câble de serrage est un câble sans fin en caoutchouc.

16. Procédé de fabrication d'un ensemble structurel conforme à l'une des revendications 11 et 17 et à la revendication 14, caractérisé en ce qu'au cours d'une première étape du procédé, le profilé d'extrémité (3) est emboîté sur le lé d'extrémité (1) du soufflet pour y être maintenu par une précontrainte ou par un effet de blocage, en ce que le soufflet muni du profilé d'extrémité est ensuite introduit dans la gouttière (8) entourée par le profilé récepteur (7), tandis que le câble de serrage présente sa longueur maximale lorsque le cadenas de serrage est ouvert et que la précontrainte augmente dans le profilé d'extrémité, et en ce que le câble de serrage est alors raccourci en fermant le cadenas de serrage.

17. Procédé de fabrication d'un ensemble structurel conforme aux revendications 13 et 15, caractérisé en ce qu'au cours d'une première étape du procédé, le profilé d'extrémité (3) est emboîté sur le lé d'extrémité (1) du soufflet pour y être maintenu par une précontrainte ou par un effet de blocage, en ce que le soufflet muni du profilé d'extrémité est ensuite introduit dans la gouttière (8) entourée par le profilé récepteur (7) et ne remplit que partiellement la gouttière entourée par le profilé récepteur, et en ce qu'en dernier lieu, une languette (22) en forme de bourrelet est mise en place afin de combler la zone restante de la section transversale du profilé récepteur en provoquant une compression du profité d'extrémité.
